# FASCICULE DE BREVET EUROPEEN

(11) **EP 0 815 168 B1**
(45) Date de publication et mention de la délivrance du brevet: **08.09.1999**
(21) Numéro de dépôt: 96905652.2
(22) Date de dépôt: 14.03.1996
(51) Int. Cl.: C08K 5/42, C08L 61/06, C08G 8/00

(54) **COMPOSITION DE DURCISSEURS POUR RESINES PHENOLIQUES**
HÄRTERZUSAMMENSETZUNG FÜR PHENOLHARZE
PHENOLIC RESIN HARDENER COMPOSITION

(30) Priorité: 17.03.1995 CH 76895
(43) Date de publication de la demande: 07.01.1998
(73) Titulaire: Transdiffusia S.A., 1208 Genève (CH)
(72) Inventeur: LAMARTINE, Roger, F-69100 Villeurbanne (FR); CHOQUARD, Philippe, CH-1223 Cologny (CH)
(74) Mandataire: Kiliaridis, Constantin
(86) Numéro de dépôt international: CH9600095
(87) Numéro de publication internationale: WO9629363

(56) Documents cités:
- DE-A- 2 745 549
- PATENT ABSTRACTS OF JAPAN vol. 016, no. 342 (C-0966), 24 Juillet 1992 & JP,A,04 100890 (SUGAI KAGAKU KOUGIYOU KK), 2 Avril 1992,

## Description

La présente invention concerne une nouvelle composition de pontage pour les résines phénoliques, en particulier pour la polycondensation des résols et la formation des novolaques.

Les résines phénoliques sont connues depuis assez longtemps. Elles se divisent généralement en deux groupes, à savoir les résols et les novolaques. On obtient les résols par une réaction de condensation à partir de phénols éventuellement substitués, et les aldéhydes, avant tout le formaldéhyde, en milieu basique tandis que la condensation des mêmes produits de départ, mais en milieu acide et, généralement, en rapports stoechiométriques différents, conduit aux novolaques qui peuvent être durcies par réticulation à des températures élevées en présence de formaldéhyde ou de substances en libérant, par exemple l'hexaméthylène tétramine.

Afin de pouvoir utiliser les résines phénoliques, elles sont réticulées pour fournir les phénoplastes, des mousses dures, des produites composites contenant des charges, comme la bakélite, etc. Certaines résines phénoliques sont autodurcissantes, en particulier les résols qui sont réticulables par leurs groupes méthylol réactifs mais cet autodurcissement ne donne pas de produits finals bien définis, et le processus de durcissement est très lent.

La réticulation des résols et la formation des novolaques mettent en jeu des mécanismes de type acide. On utilise à ces fins l'acide sulfurique ou l'acide toluène sulfonique par exemple. Cependant, un grand désavantage de l'utilisation de ces acides est le fait qu'ils sont emprisonnés au cours des réactions de polycondensation et de réticulation dans les polymères en formation ce qui confère aux produits finis un contenu d'acides libres.

La présente invention vise à supprimer ce désavantage sérieux et principal en remplaçant les acides utilisés jusqu'à présent, et d'améliorer le processus de polycondensation et de réticulation. Ce but est rempli par une nouvelle composition qui fait l'objet de la première revendication indépendante. La seconde revendication indépendante définit un procédé de réticulation de résols en utilisant la nouvelle composition, et la troisème revendication indépendante un procédé analogue de formation de novolaques.

On peut conduire la condensation phénol-formaldéhyde (formol) dans des conditions de stoechiométrie données en présence d'acide ou de base de telle manière qu'on obtient des oligomères phénoliques linéaires et/ou cycliques plus ou moins condensés. La sulfonation de ces oligomères, purs ou en mélange, conduit à des oligomères phénoliques linéaires et/ou cycliques partiellement ou totalement sulfonés. Ces substances sont déjà en partie connues, voir, par exemple, l'article "Synthesis and acid-base properties of calix[4], calix[6] and calix[8]arenes p-sulfonic acids" par J.P Scharff, M. Mahjoubi et R. Perrin, *New J. Chem.,* 1991, **15**, 883-887. Les oligomères phénoliques cycliques sont appelés "calixarènes", et le nombre d'noyaux phénoliques par molécule est porté dans le nom entre crochets.

De manière surprenante, on a maintenant trouvé que ces oligomères phénoliques sulfonés, introduits dans les résols et/ou utilisés pour former des novolaques au lieu des acides employés jusqu'à présent, permettent de fournir des produits phénoliques ayant des propriétés nouvelles, avantageuses et inattendues. En ce qui concerne la polycondensation des résols en produits réticulés, ces substances remplacent le catalyseur acide classique au moins en partie et de préférence totalement; elles ne restent pas comme telles enfermées dans le réseau réticulé mais sont chimiquement combinées dans la structure du réseau. Appliquées à la formation de novolaques, elles remplacent partiellement ou mieux, totalement les catalyseurs acides habituels et sont également incorporées dans la structure chimique de la novolaque.

Dans le présent document, la composition de substances dont il s'agit ici est appelée "Composition de pontage" pour englober et les agents réticulants dans le cas des résols et le "catalyseur" de formation de novolaques. Cette composition est définie par au moins un oligomère phénolique cyclique partiellement ou totalement sulfoné en mélange avec au moins un oligomère phénolique linéaire partiellement ou totalement sulfoné et, éventuellement, un phénol sulfoné. Par "phénolique" et "phénol", respectivement, on entend un composé présentant au moins un noyau à insaturation aromatique substitué par au moins un groupe -OH et présentant les sites ortho non substitués; sont donc inclus dans cette définition les phénols substitués en méta et/ou para par des substituants classiques comme alkyle, alkényle, aryle, éther, nitro, halogéno, etc.; ces substituants peuvent être choisis à volonté à la seule condition qu'ils n'entravent pas la formation des résols et des novolaques désirés. Ces substituants peuvent être utiles pour conférer aux produits finis des propriétés spéciales; l'homme du métier connaît les principes d'action de substituants particuliers.

Dans la composition de l'invention, les oligomères linéaires et cycliques peuvent être tout ou partiellement sulfonés. La proportion d'oligomères linéaires sulfonés, de phénol sulfoné et d'oligomères cycliques sulfonés peut varier dans toute proportion comprise entre 0 et 100 %.

L'avantage majeur de la composition selon l'invention est qu'elle est normalement soluble dans l'eau. Suivant les proportions ajoutées de solution aqueuse d'oligomères linéaires et/ou de phénol sulfoné dans les oligomères cycliques, on peut modifier et ajuster la viscosité du réticulant dans le cas des résols. La viscosité finale du réticulant, constitué par le mélange mentionné d'oligomères phénoliques sulfonés, peut généralement varier entre 0,03 Pa.s et 3 Pa.s environ, mesurée à 20 °C.

L'utilisation d'oligomères phénoliques cycliques (calixarènes) tout ou partiellement sulfonés comme réticulant selon l'invention permet d'abord d'accélérer les vitesses; mélangés à des oligomères phénoliques sulfonés linéaires dans des proportions de 0,5 à 5 %, ils conduisent à une réduction du temps de réticulation des résols jusqu'à un cinquième de la durée requise jusqu'à présent. Utilisés en mélange aux oligomères phénoliques linéaires sulfonés, les calixarènes sulfonés permettent la condensation phénol-formol avec formation de novolaques; par rapport à l'acide para-toluène sulfonique couramment utilisé, le temps de condensation est divisé par 4 environ.

Ensuite, l'utilisation de la composition selon l'invention contenant des oligomères phénoliques cycliques (calixarènes) tout ou partiellement sulfonés a pour effet de pouvoir mieux contrôler les processus de réticulation et de condensation. La réticulation des résols et la formation de novolaques mettent en jeu des mécanismes de type acide. Les oligomères phénoliques cycliques sulfonés possèdent des propriétés acido-basiques modulables du fait de leurs acidités variés. Ainsi, l'acide calix[4]arène p-sulfonique possède quatre acidités fortes dues aux groupes SO₃H et une acidité forte pour le groupe OH (superacide) et trois acidités très faibles de pK > 11.

L'emploi d'oligomères phénoliques cycliques (calixarènes) tout ou partiellement sulfonés selon l'invention permet aussi de renforcer les propriétés des phénoliques. Les oligomères phénoliques sulfonés, de même nature que les résines phénoliques, à savoir les résols et les novolaques, s'incorporent chimiquement dans la microstructure du polymère. Ils sont parfaitement compatibles avec les résines et augmentent leurs propriétés mécaniques et anti-feu. Ils sont thermiquement et chimiquement stables et présentent des points de fusion élevés. Par exemple, l'analyse thermogravimétrique de l'acide calix[6]arène p-sulfonique hydraté met en évidence la grande stabilité du produit, on note un premier départ d'eau vers 190 °C seulement puis un départ d'eau vers 250 °C avec apparition d'un palier correspondant sensiblement au départ de 7 molécules d'eau qui est le nombre de molécules d'eau associé au calixarène, d'ou des propriétés retardatrices et anti-feu. Le point de fusion est supérieur à 300 °C, et on ne note pas de dégradation du produit jusqu'à 800 °C.

Finalement, on a constaté que l'utilisation d'oligomères phénoliques cycliques (calixarènes) tout ou partiellement sulfonés selon l'invention a pour effet d'obtenir des matériaux phénoliques ayant des propriétés sélectives de complexation; les oligomères phénoliques sulfonés cycliques introduits dans les étapes de condensation et de réticulation des phénoliques apportent en plus de leurs fonctions acides des sites potentiels de complexation. Les calixarènes, par leurs cavités ou leurs fractions, constituent des sites privilégiés et sélectifs pour complexer les ions, les métaux ou les molécules faiblement polaires ou même neutres. C'est ainsi que les calix[4]arènes en conformation cône complexent les cations Li⁺, Na⁺, K⁺, Rb⁺, Cs⁺, les métaux Ti⁴⁺, Fe³⁺, Co²⁺, certains molécules neutres telles que toluène, xylène (le p-xylène sélectivement); que l'acide calix[6]arène para sulfonique complexe le UO²⁺, et que les calix[8]arènes permettent de complexer le Eu³⁺ et d'autres lanthanides. Ces propriétés sélectives de complexation des oligomères phénoliques cycliques fournissent par exemple des matériaux phénoliques ayant des capacités de reconnaissance, de séparation, de dépollution, d'inertage, etc.

Les exemples qui suivent illustrent l'invention plus en détail sans pourtant la limiter aux composés et méthodes exemplifiés.

### I. Préparation des oligomères phénoliques

### A. Préparation d'oligomères phénoliques linéaires

### Exemple 1

Dans 220 g de phénol contenant 10 % en poids d'eau, on introduit lentement 10 ml d'acide sulfurique à 95 % sous agitation à une température de 40 °C. On ajoute lentement sous agitation 45 ml de formaline aqueuse à 37 % en contrôlant la température qui doit rester au plus égale à 40 °C. On continue l'agitation encore pendant 1 heure.

La solution d'oligomères ainsi obtenue est décantée, et la phase phénolique est séparée de la phase aqueuse.

Comme résultat d'analyses par RMN du proton et du carbone (résonance magnétique nucléaire), on trouve que les oligomères phénoliques formés dans cet Exemple présentent un degré de condensation entre 1 et 12 avec des ponts méthylène o-p et p-p, les pontages o-o existent mais sont peu nombreux.

### B. Préparation d'oligomères phénoliques cycliques

### Exemple 2

On prépare un mélange en combinant 33,33 g de p-tert-butylphénol, 11,67 g de paraformaldéhyde, 0,667 ml d'une solution aqueuse de soude 10N, et 200 ml de xylène. Le mélange est agité sous azote et porté à reflux pendant 4 heures, l'eau de condensation étant éliminée par un dispositif de Dean-Stark.

Les oligomères cycliques obtenus forment un précipité solide qui est récupéré par filtration. En ce qui est du rendement, 91 % en poids du phénol de départ est transformé en oligomères cycliques.

L'analyse HPLC (chromatographie liquide à haute performance) a fourni la composition suivante du produit de réaction, donnée en % en poids du total:

| | |
|---|---|
| p-tert-butylcalix[8]arène | 87 % |
| p-tert-butylcalix[4]arène | 3 % |
| p-tert-butyldihomooxacalix[4]arène | 1 % |
| p-tert-butylcalix[5]arène | 1 % |
| p-tert-butylcalix[6]arène | 4 % |
| p-tert-butylcalix[7]arène | 4 %. |

### Exemple 3

On mélange 20 g de p-tert-butylphénol, 3 g de KOH en pastilles, pureté: 84 %, et 27 ml de formaline à 37 % dans l'eau. Le mélange est agité sous courant d'azote, et chauffé jusqu'à l'obtention d'une masse visqueuse jaune. On ajoute alors 200 ml d'o-xylène, et l'ensemble est porté à reflux pendant 3 heures à 145 °C, en éliminant l'eau du mélange.

Le mélange réactionnel est filtré à froid, et l'on récupère 21 g d'un précipité solide qui présente la composition suivante:

| | |
|---|---|
| p-tert-butylcalix[6]arène | 95 % |
| p-tert-butylcalix[4]arène | 4 % |
| p-tert-butylcalix[8]arène | 1 %. |

### Exemple 4

On mélange les composants suivants: 20 g de p-tert-butylphénol, 12,4 ml de formaline à 37 %, et 0,24 g de NaOH à 98 %. Le mélange est chauffé pendant 2 heures à 110 °C et ensuite refroidi à la température ambiante au cours de 30 minutes. On ajoute alors 200 ml de diphényl éther préchauffé à 200 °C. Le mélange réactionnel, placé sous azote, est porté à reflux pendant 1,5 heure puis refroidi. On ajoute 300 ml d'acétate d'éthyle en agitant pendant 15 minutes. A froid, le mélange est filtré, et l'on obtient 16 g d'un précipité solide. Ce précipité présente la composition pondérale suivante:

| | |
|---|---|
| p-tert-butylcalix[4]arène | 90 % |
| p-tert-butylcalix[6]arène | 5 % |
| p-tert-butylcalix[7]arène | 4 % |
| p-tert-butylcalix[8]arène | 1 %. |

### II. Sulfonation des oligomères phénoliques

Pour obtenir les compositions de l'invention, il est nécessaire de sulfoner les composés obtenus dans la partie I des exemples.

### A. Sulfonation des oligomères phénoliques linéaires

### Exemple 5

On introduit dans 245 ml d'oligomères phénoliques, obtenus dans l'Exemple 1 ci-dessus, 70 ml d'acide sulfurique à 95 % lentement sous agitation en prenant soin que la température ne dépasse pas 50 °C. Après la fin de l'introduction, l'agitation est maintenue pendant 16 heures encore. Les oligomères phénoliques sulfonés sont obtenues en solution dans l'eau.

L'analyse par RMN C¹³ montre que les oligomères sont peu condensés, 1 pont méthylène pour 3 cycles, que les pontages sont de type ortho-para (40 %) et para-para (60 %), et qu'il y a dans le mélange des monomères sulfonés, du phénol sulfoné et des oligomères o-p et p-p partiellement sulfonés.

### B. Sulfonation des oligomères cycliques

### Exemple 6. Sulfonation totale

La première étape de la préparation comprend une désalkylation des oligomères afin de libérer des sites pour la sulfonation.

On dissout 35 g du précipité solide de l'Exemple 2 dans 350 ml de toluène, et l'on ajoute 41 g de chlorure d'aluminium anhydre. Le mélange est agité à température ambiante pendant 4 heures sur quoi la désalkylation est terminée. On arrête la réaction par l'addition de 500 ml d'acide chlorhydrique 1N, et l'on récupère la phase organique par décantation puis on évapore le toluène

La sulfonation des oligomères cycliques désalkylés est effectuée par l'ajout de 350 ml d'acide sulfurique à 98 %, et le milieu réactionnel est agité sous atmosphère d'azote à 100 °C pendant 6 heures. Le solide récupéré par filtration est traité par l'acétate d'éthyle pour amorcer la cristallisation.

Dans l'analyse, on a trouvé que tous les oligomères cycliques sont sulfonés, les sites para des calixarènes portent tous un groupe -SO₃H.

### Exemple 7. Sulfonation partielle

La sulfonation partielle ne demande pas de désalkylation préalable.

On dissout 35 g du précipité obtenue dans l'exemple 2 dans 350 ml de toluène, et l'on rajoute 400 ml d'acide sulfurique à 98 %. Le milieu réactionnel est agité sous atmosphère d'azote pendant 6 heures à 100 °C. Ensuite, on récupère le solide par filtration et on le traite par l'acétate d'éthyle pour le faire cristalliser.

L'analyse montre que les oligomères cycliques sont partiellement sulfonés, les sites para des calixarènes portent soit un groupe -SO₃H soit un groupe tert-butyle, certains ayant été dé-tert-butylés lors de la sulfonation.

Il va de soi qu'on peut changer les rapports de composants réactifs, les concentrations (notamment de l'acide sulfurique), etc., afin de produire des oligomères phénoliques sulfonés et leurs précurseurs modifiés. D'autres modifications sont également possibles, par exemple l'addition aux compositions de diluants, de charges finement divisées, de régulateurs de viscosité ou de réactivité, de colorants, etc.

## Revendications

1. Composition de pontage pour la polycondensation de résols et la formation de novolaques à partir d'un phénol et d'un aldéhyde, caractérisée en ce qu'elle contient au moins un oligomère phénolique cyclique partiellement ou totalement sulfoné, et au moins un oligomère phénolique linéaire partiellement ou totalement sulfoné.

2. Composition selon la revendication 1, caractérisée en ce qu'elle contient en plus au moins un phénol sulfoné.

3. Composition selon la revendication 1 ou 2, caractérisée en ce qu'elle contient un mélange de calixarènes [4] à [8] totalement ou partiellement sulfonés.

4. Procédé de réticulation de résols phénoliques, caractérisé en ce qu'on ajoute à un résol une composition contenant au moins un oligomère phénolique cyclique partiellement ou totalement sulfoné et qu'on procède à la réticulation, la composition remplaçant au moins partiellement le catalyseur acide de réticulation, la composition étant chimiquement incorporée dans le produit réticulé formé.

5. Procédé de formation de novolaques à partir d'un phénol et d'un aldéhyde ou d'un précurseur d'aldéhyde, caractérisé en ce qu'on ajoute aux produits de départ mentionnés une composition contenant au moins un oligomère phénolique cyclique partiellement ou totalement sulfoné, cette composition remplaçant au moins en partie le catalyseur acide de condensation la composition étant chimiquement incorporée dans la novolaque.

6. Procédé selon la revendication 4 ou 5, caractérisé en ce que ladite composition contient en plus au moins un oligomère phénolique linéaire partiellement ou totalement sulfoné.

7. Procédé selon l'une des revendications 4 à 6, caractérisé en ce que ladite composition contient en plus au moins un phénol sulfoné.

8. Procédé selon l'une des revendications 4 à 7, caractérisé en ce que ladite composition contient un mélange de calixarènes (4 à 8) totalement ou partiellement sulfonés.

9. Résine phénolique issue d'une polycondensation de résol, caractérisée en ce qu'elle contient, incorporé chimiquement dans la microstructure du polymère, au moins un oligomère phénolique cyclique totalement ou partiellement sulfoné.

10. Novolaque issue d'une polycondensation d'aldéhyde et de phénol, caractérisée en ce qu'elle contient, incorporé chimiquement dans la microstructure du polycondensat, au moins un oligomère phénolique cyclique partiellement ou totalement sulfoné.

11. Résine phénolique ou novolaque selon la revendication 9 ou 10, caractérisée en ce qu'il comprend en plus incorporé chimiquement dans la microstructure du polymère, au moins un oligomère phénolique linéaire partiellement ou totalement sulfoné.

12. Résine phénolique ou novolaque selon la revendication 9 ou 10, caractérisée en ce qu'il comprend en plus incorporé chimiquement dans la microstructure du polymère au moins un phénol sulfoné.

## Patentansprüche

1. Brückenbildende Zusammensetzung zur Polykondensation von Resolen und zur Bildung von Novolaken, ausgehend von einem Phenol und einem Aldehyd, dadurch gekennzeichnet, dass sie mindestens ein teilweise oder vollständig sulfoniertes cyclisches Phenololigomer und mindestens ein teilweise oder vollständig sulfoniertes lineares Phenololigomer enthält.

2. Zusammensetzung nach Anspruch 1, dadurch gekennzeichnet, dass sie zusätzlich mindestens ein sulfoniertes Phenol enthält.

3. Zusammensetzung nach Anspruch 1 oder 2, dadurch gekennzeichnet, dass sie ein Gemisch vollständig oder teilweise sulfonierter Calixarene [4] bis [8] enthält.

4. Verfahren zur Vernetzung von phenolischen Resolen, dadurch gekennzeichnet, dass man zu einem Resol eine Zusammensetzung zugibt, welche mindestens ein teilweise oder vollständig sulfoniertes cyclisches Phenololigomer enthält, und dass man dann die Vernetzung vornimmt, wobei die Zusammensetzung mindestens zum Teil den sauren Vernetzungskatalysator ersetzt und chemisch in das gebildete Vernetzungsprodukt eingebaut wird.

5. Verfahren zur Bildung von Novolaken ausgehend von einem Phenol und einem Aldehyd oder einem Aldehydvorprodukt, dadurch gekennzeichnet, dass man den genannten Ausgangsprodukten eine Zusammensetzung zugibt, welche mindestens ein teilweise oder vollständig sulfoniertes cyclisches Phenololigomer enthält, wobei die Zusammensetzung mindestens zum Teil den sauren Kondensationskatalysator ersetzt und chemisch in das Novolak eingebaut wird.

6. Verfahren nach Anspruch 4 oder 5, dadurch gekennzeichnet, dass die genannte Zusammensetzung zusätzlich mindestens ein teilweise oder vollständig sulfoniertes lineares Phenololigomer enthält.

7. Verfahren nach einem der Ansprüche 4 bis 6, dadurch gekennzeichnet, dass die genannte Zusammensetzung ausserdem mindestens ein sulfoniertes Phenol enthält.

8. Verfahren nach einem der Ansprüche 4 bis 7, dadurch gekennzeichnet, dass die genannte Zusammensetzung ein Gemisch vollständig oder teilweise sulfonierter Calixarene [4] bis [8] enthält.

9. Phenolharz, erhalten durch eine Resol-Polykondensation, dadurch gekennzeichnet, dass es mindestens ein vollständig oder teilweise sulfoniertes cyclisches Phenololigomer enthält, welches chemisch in die Mikrostruktur des Polymers eingebaut ist.

10. Novolak, erhalten durch eine Polykondensation aus Aldehyd und Phenol, dadurch gekennzeichnet, dass es mindestens ein vollständig oder teilweise sulfoniertes cyclisches Phenololigomer enthält, welches chemisch in die Mikrostruktur des Polykondensats eingebaut ist.

11. Phenolharz oder Novolak gemäss Anspruch 9 oder 10, dadurch gekennzeichnet, dass es zusätzlich mindestens ein teilweise oder vollständig sulfoniertes lineares Phenololigomer enthält, welches chemisch in die Mikrostruktur des Polymers eingebaut ist.

12. Phenolharz oder Novolak gemäss Anspruch 9 oder 10, dadurch gekennzeichnet, dass es zusätzlich mindestens ein sulfoniertes Phenol enthält, welches chemisch in die Mikrostruktur des Polymers eingebaut ist.

## Claims

1. Curing composition utilizable in the polycondensation of resols and in the formation of novolaks starting from a phenol and an aldehyde, characterized in that the composition contains at least one partially or totally sulfonated cyclic phenolic oligomer, and at least one partially or totally sulfonated linear phenolic oligomer.

2. Composition according to claim 1, characterized in that it further contains at least one sulfonated phenol.

3. Composition according to claim 1 or 2, characterized in that it contains a mixture of totally or partially sulfonated calixarenes [4] to [8].

4. Process for the crosslinking of phenolic resols, characterized in that a composition containing at least one partially or totally sulfonated cyclic phenolic oligomer is added to a resol and the crosslinking is carried out, the composition replacing at least in part the acid crosslinking catalyst, the composition being further chemically incorporated into the formed crosslinked product.

5. Process for the formation of novolaks, starting from a phenol and an aldehyde or aldehyde precursor, characterized in that a composition containing at least one partially or totally sulfonated cyclic phenolic oligomer is added to the said starting products, said composition replacing at least in part the acid condensation catalyst, the composition being further chemically incorporated into the novolak.

6. Process according to claim 4 or 5, characterized in that said composition contains furthermore at least one partially or totally sulfonated linear phenolic oligomer.

7. Process according to one of claims 4 to 6, characterized in that said composition further contains at least one sulfonated phenol.

8. Process according to one of claims 4 to 7, characterized in that said composition contains a mixture of totally or partially sulfonated calixarenes [4] to [8].

9. Phenolic resin obtained by a polycondensation of a resol, characterized in that it comprises, chemically incorporated into the microstructure of the polymer, at least one partially or totally sulfonated cyclic phenolic oligomer.

10. Novolak obtained by the polycondensation of an aldehyde and a phenol, characterized in that it comprises, chemically incorporated into the microstructure of the polycondensate, at least one partially or totally sulfonated cyclic phenolic oligomer.

11. Phenolic resin or novolak according to claim 9 or 10 characterized in that it further comprises, chemically incorporated into the microstructure of the polymer, at least one partially or totally sulfonated linear phenolic oligomer.

12. Phenolic resin or novolak according to claim 9 or 10 characterized in that it further comprises, chemically incorporated into the microstructure of the polymer, at least one sulfonated phenol.
